Europäisches Patentamt

European Patent Office

Office européen des brevets

(11) Publication number: **0 326 874**
**A1**

## (12) EUROPEAN PATENT APPLICATION

(21) Application number: 89100953.2

(22) Date of filing: 20.01.89

(51) Int. Cl.⁴: **B65D 79/02** , **B65D 81/18** , **G01K 11/02**

(30) Priority: 27.01.88 IT 1922988

(43) Date of publication of application:
09.08.89 Bulletin 89/32

(84) Designated Contracting States:
AT BE CH DE ES FR GB GR IT LI LU NL SE

(71) Applicant: VELA S.r.L.
Viale Teodorico, 9
I-20149 Milan(IT)

(72) Inventor: Zarotti, Claudio
Via M. Polo, 7
I-20124 Milan(IT)

(74) Representative: De Nova, Roberto et al
c/o Jacobacci-Casetta & Perani S.n.c. Via
Visconti di Modrone 7
I-20122 Milano(IT)

(54) A package for heat perishable articles, particularly but not exclusively deep-frozen food articles.

(57) This package is intended for perishable articles to be stored at a temperature below a safe limit. The package (1) comprises a safeguard device (3) operative to signify if the article has been exposed to temperatures above the safe limit. The safeguard device (3) includes an expansible blister (4) filled with a fluid the boiling temperature whereof is equal to that safe limit temperature, and a safety seal (5) associated with the blister (4) such as to undergo irreversible damage on the blister (4) expanding due to the fluid boiling.

Fig-1

EP 0 326 874 A1

This invention relates to a package for perishable articles to be kept in store at a temperature below a predetermined safe level.

Articles of this kind pose sizable preservation problems, especially where the top limit to admissible temperature is quite low, as in the instance of deep-frozen food articles.

It is a well-recognized fact that a frozen food article is achieved rapidly cooling it down to a very low temperature, whereafter the article is to be kept at a very low temperature throughout its merchandising course from its producer, through the wholesale and retail dealers to the consumer. Any rise in temperature may affect its preservability.

It may be appreciated that the damage threshold and the extent of any damage to the article are in practice impossible to define in general terms; in fact, some articles can tolerate substantially unharmed even relatively high temperatures for a fairly long time period, whereas with other articles, a very slight temperature rise of even very short duration is enough to deteriorate their organoleptic characteristics or impair their wholesomeness.

In all cases, the Italian law provides for an article to qualify as "deep-frozen", and for sale as such, where it is prepared by cooling to a temperature below -40°C such that thorough freezing of the article is achieved within 4 hours, thereafter its temperature should never rise above -18°C before its ultimate consumption. Accordingly, the terms shown on the package are to take these conditions into account.

Quite similar problems are encountered with other heat perishable commodities, such as non-deep-frozen food articles, pharmaceutical products, photographic materials, and so forth.

To avoid the risk that a rise in temperature (as due, for example, to malfunctions or power outages to refrigerating equipment) may damage an article, arrangements may be provided to timely signify that the ambient temperature is approaching or has reached a predetermined danger threshold (e.g., light indicators and/or sound alarms).

Such arrangements enable, for example, the consumer to keep articles stored in his/her refrigerator under proper control, and the observant dealer to withdraw from sale any articles likely to have been damaged by a temperature rise.

However, such arrangements can give no assurance for an article buyer that the article has been constantly stored at its correct temperature.

The need is felt, therefore, quite strongly to give the buyer of a heat perishable article, in particular a deep-frozen food article, full assurance that the article has been properly kept in store throughout, thereby it may be further stored quite safely until expiry of the terms indicated on the article wrapper.

An approach to meeting this demand comes from the device disclosed in Italian Patent Application No. 23388 A/79 and its Continuation No. 24091 A/79.

This prior approach proposes that a package be used having a clear cap which contains two close-together materials, specifically a salt solution and a colorant; the salt solution has its eutectic point setting at a predetermined temperature (e.g., -18°C), and on that temperature being reached, a liquid phase appears through which the colorant diffuses to irreversibly signify the heating undergone by the package.

However, this provides no satisfactory solution to the problem because its practical application to an ordinary article package shows to be complicated and expensive enough to make its adoption on a commercial scale quite difficult.

Thus, the problem has been left unsolved of how to enable the buyer of a heat perishable article, in particular a deep-frozen food article, to check whether the article has undergone such heating as to impair its preservability.

This problem is now solved by this invention providing a package as indicated, characterized in that it comprises a safeguard device including an expansible blister filled with a fluid whose boiling temperature is the highest allowable storage temperature for the article, and a safety seal associated with said blister such as to be irreversibly damaged by any expansion of said blister due to boiling of the fluid therein.

Further features and the advantages of a package according to the invention will be more clearly understood by making reference to the following detailed description of some preferred embodiments thereof, to be taken in conjunction with the accompanying drawings, where:

Figure 1 is a perspective view of a package for heat perishable articles according to the invention;

Figures 2 and 3 are sectional views showing the safeguard device of the package of Figure 1 under two different operating conditions thereof;

Figures 4 and 5 are sectional views of a safeguard device of a variation of the package according to the invention, shown under two different operating conditions thereof; and

Figure 6 is a sectional view of a safeguard device of a further variation of the inventive package.

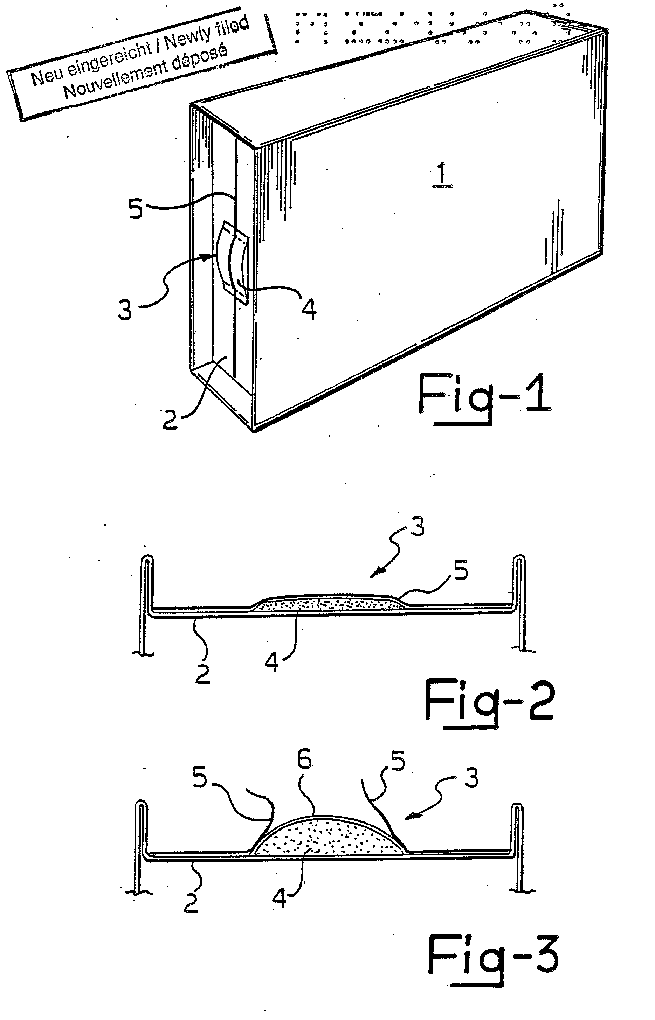

With reference to Figures 1 to 3, generally indicated at 1 is a package for heat perishable articles, such as deep-frozen food articles; the package 1 may be formed, for example, from thin paperboard similarly to comparable conventional packages, and has a recessed wall 2 which provides a bay to accommodate a safeguard device, generally indicated at 3.

The safeguard device 3 comprises an expansible blister 4 permanently attached to the wall 2 as by cementing, heat welding, or the like.

The blister 4 is preferably formed from a laminate wherein a metal layer is sandwiched between layers of a synthetic plastics material; in particular, the outermost layer should be made of polyester, this being a non-toxic material which may be safely placed in the proximities of food articles. The thickness of the material to be employed should be selected to provide adequate thermal inertia to prevent the safeguard device 3 from becoming affected by temperature fluctuations which may be sufficiently rapid as not to damage the article.

The blister 4 contains a fluid whose boiling temperature is the equal of the highest temperature judged to be admissible for proper preservation of the article packed in the package 1, e.g. -18°C. Accordingly, at lower temperatures, the fluid will be in the liquid state and the blister 4 in a non-expanded state (Figure 2), whereas at higher temperatures, the fluid will be vaporized and expand the blister 4 (Figure 3).

The safeguard device 3 includes a safety seal 5 associated with the blister 4 in such a manner as to be irreversibly damaged by an expansion of the blister 4. More specifically, the seal 5 comprises a strip of a contrasting color paper permanently cemented to the wall 2 and passed over the blister 4; alternatively, the seal 5 could be a stripe of a frangible paint applied directly onto the blister 4 and adapted to flake off upon the blister 4 being expanded.

Advantageously, the blister 4 is provided with a protective coating 6 on its outward or remote side from the package 1 effective to keep the temperature of the blister 4 as close as possible to the actual temperature of the article within the package 1 and unaffected by any sharp fluctuations in the ambient temperature which would leave the article practically unconcerned.

With reference now to the embodiments illustrated by Figures 4,5 and Figure 6, a package 11 for heat perishable articles, in particular deep-frozen food articles, has a recess 12 which constitutes a bay for accommodating a safeguard device, generally indicated at 13.

The safeguard device 13 comprises a rigid enclosure 14 the dimensions of which substantially match those of the recess 12; at least a top side 15 of the enclosure 14 is clear.

The enclosure 14 houses an expansible blister 16 similar to the blister 4 of the package 1, which is formed from a laminate and contains a fluid having a boiling temperature equal to the highest temperature regarded to be safe for proper preservation of the article within the package 11, e.g. -18°C.

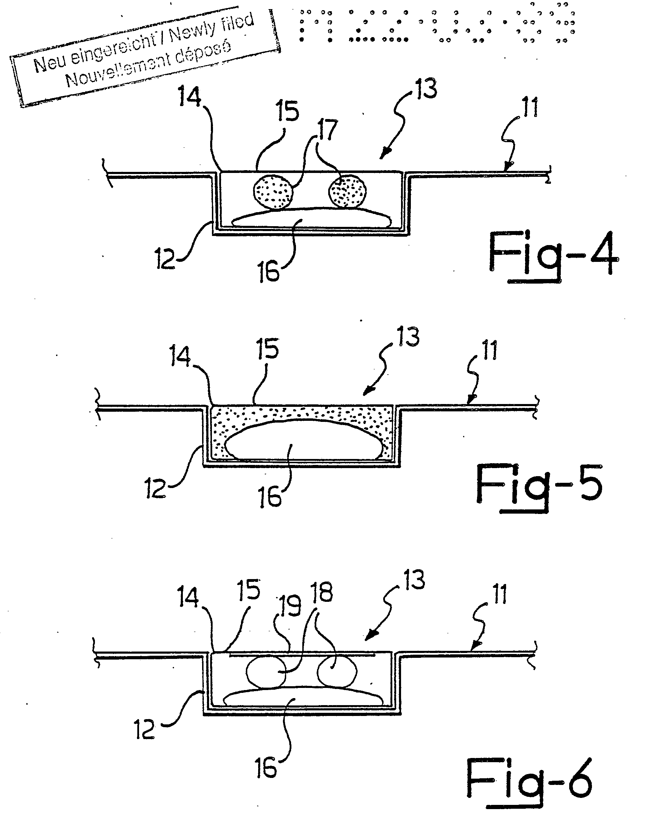

Making now reference to just the embodiment of Figures 4 and 5, the enclosure 14 also houses at least one bubble 17 (in Figures 4 and 5, two such bubbles 17 are shown) of a colored liquid adapted to be ruptured and release its colored liquid upon expansion of the blister 16.

With reference to the embodiment shown in Figure 6, the enclosure 14 houses at least one bubble 18 (in Figure 6, two such bubbles 18 are shown) of a liquid having markedly basic (or acid) chemical properties, which is adapted to be ruptured and release its liquid should the blister 16 expand; litmus paper 19 would then be altered by such release in a permanent and discernible way.

The bubbles 17 of the embodiment shown in Figures 4 and 5, and the bubbles 18 combined with the litmus paper 19 of the embodiment shown in Figure 6, actually constitute safety seals comparable with the seal 5 of the package 1.

The fluid used in the blisters 4 and 16 is preferably a mixture of two types of freon's; in particular, in the instance of a deep-frozen food article package wherein the temperature limit is -18°C, a mixture may be employed containing 66% by liquid volume of Freon 12 (raw formula, $CCl_2F_2$, boiling temperature -29.8°C) and 34% by volume of the liquid of Freon 114 (raw formula, $C_2Cl_2F_4$, boiling temperature +3.5°C).

Where the package of this invention is to be used in relation to articles having different maximum admissible temperatures, it will be sufficient to alter the proportions of the components to suit. If the highest admissible temperature is above +3.5°C, instead of Freon 114 or Freon 12, Freon 11 (raw formula, $CCl_3F$, boiling temperature +23.7°C) may be advantageously used, or alternatively Freon 113 (raw formula, $C_2Cl_3F_3$, boiling temperature +47.7°C), or some other freon's or even fluids of another type could be used.

As may be appreciated from the foregoing description, a package according to this invention can solve the problem of assuring a buyer of a heat perishable article of the article having been constantly stored at the correct temperature.

In fact, it can signify in a reliable and irreversible manner whether an article has been heated to above its set safe limit, and the buyer can directly check its storage condition.

It should be also noted that the recessed mount provided for the safeguard device is not only effective to protect the device against incidental shocks but also to keep the blister temperature as close as possible to the actual temperature of the article; furthermore, in the instance of the embodiment shown in Figures 1, 2 and 3, the recessed mount for the safeguard device prevents the blister from encountering obstacles in its expansion movement.

Understandably, numerous modifications to the packages disclosed hereinabove may occur to skilled persons in the art within the scope of the invention as set forth in the appended claims.

## Claims

1. A package for perishable articles to be kept in store at a temperature below a predetermined safe level, characterized in that it comprises a safeguard device (3;13) including an expansible blister (4;16) filled with a fluid whose boiling temperature is equal to said safe temperature level, and a safety seal (5;17;18;19) associated with said blister (4;16) such as to be irreversibly damaged by any expansion of said blister (4;16) due to boiling of the fluid therein.

2. A package according to Claim 1, characterized in that the fluid is a mixture.

3. A package according to Claim 2, characterized in that the mixture comprises at least two freons.

4. A package according to Claim 3, characterized in that the mixture comprises 66% by liquid volume of Freon 12 and 34% by liquid volume of Freon 114, to attain a boiling temperature of approximately -18°C.

5. A package according to Claim 1, characterized in that the blister (4) is permanently attached to a recessed wall (2) of said package (1).

6. A package according to Claim 5, characterized in that the safety seal comprises a paper strip (5) permanently cemented onto said recessed wall (2) and passed over said blister (4).

7. A package according to Claim 5, characterized in that the blister (4) has a protective coating (6) on its outward side away from the package (1).

8. A package according to Claim 1, characterized in that the safety seal comprises, located within an enclosure (14) having at least a top side (15) clear and being adapted to accommodate said blister (16) therein, at least one bubble (17) of a colored liquid intended to be ruptured and to release colored liquid on the blister (16) being expanded.

9. A package according to Claim 1, characterized in that the safety seal comprises, within an enclosure (14) having at least a top side (15) clear and being adapted to accommodate said blister (16) therein, at least one bubble (18) of a liquid having markedly basic or acid chemical properties and litmus paper (19), said liquid bubble (18) being intended to be ruptured and to release liquid to the litmus paper (19) on the blister (16) being expanded.

1

5

3

4

2

**Fig-1**

3

5

2

4

**Fig-2**

5    6    5    3

2

4

**Fig-3**

**Fig-4**

**Fig-5**

**Fig-6**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 146 583 (RICHTER & WIESE) <br> * page 8, line 14 - page 9, line 1; claim 1 * <br> --- | 1 | B 65 D 79/02 <br> B 65 D 81/18 <br> G 01 K 11/02 |
| A | CH-A- 559 134 (MECKENSTOCK) <br> * column 1, lines 29-45; figure * <br> --- | 1,2 | |
| A | US-A-2 326 771 (R.W. EIDSON) <br> * page 2, column 1, lines 46-48 * <br> ----- | 1 | |

TECHNICAL FIELDS SEARCHED (Int. Cl.4)

B 65 D 79/00
B 65 D 81/00
G 01 K 11/00

The present search report has been drawn up for all claims

| Place of search | Date of completion of the search | Examiner |
|---|---|---|
| BERLIN | 18-04-1989 | NOVELLI B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)